# EUROPEAN PATENT SPECIFICATION

(11) **EP 2 033 888 B1**
(45) Date of publication and mention of the grant of the patent: **07.07.2010**
(21) Application number: 07115976.8
(22) Date of filing: 07.09.2007
(51) Int. Cl.: B62K 21/16

(54) **A coupling member**
Kopplungselement
Élément d'accouplement

(43) Date of publication of application: 11.03.2009
(73) Proprietor: Picard, Luc, 1930 Zaventem (BE)
(72) Inventor: Picard, Luc, 1930 Zaventem (BE)
(74) Representative: Quintelier, Claude

(56) References cited:
- DE-A1- 19 837 972
- US-A- 5 727 427

## Description

The present invention relates to a coupling member provided for being mounted between a fork and a handlebar of a two wheeled vehicle, in particular a bicycle.

In the prior art, such a coupling member is meant to connect a fork and a handlebar of a two wheeled vehicle to each other. To obtain a comfortable driving position, the handlebar is connected to the fork by means of the coupling member so as to be aligned substantially perpendicular with respect to the plane in which the front wheel extends.

A drawback of a two wheeled vehicle using such a coupling member is that some space is required to store and transport such a vehicle. The width of the vehicle is essentially determined by the width of the handlebar. Moreover due to the fact that the handlebar is aligned substantially perpendicular to the plane in which the front wheel extends, the distal edges of the vehicle are formed by the ends of the handlebar. This causes a loss of space in view of storage and transport of the vehicle. Although it is possible for a skilled person to rotate the handlebar with respect to the front wheel, the user wouldn't do it in daily use as it has some inconveniences. Indeed to rotate the handlebar with respect to the front wheel, it is necessary to use a separate, additional tool to loosen the connection between the handlebar and the front wheel, and then to hold the front wheel while rotating the handlebar, which is quite cumbersome.

Such a coupling member according to the preamble of the independent claim 1 is shown in DE 198 37 972.

It is an object of the present invention to realize a coupling member which, when mounted on a two wheeled vehicle, enables to store and transport the vehicle in a stable and more compact manner without the use of a separate, additional tool and without having to hold the front wheel while rotating the handlebar.

For this purpose, a coupling member according to the present invention is characterized in that said coupling member comprises a first and a second part, which first part is provided to be connected to said fork and which second part is provided to be connected to said handlebar, which first and second part are rotably coupled and mounted along a same axis, said axis being tilted with respect to a rotational axis of said handlebar over a first angle situated between 10 and 85 degrees, preferably between 20 and 70 degrees, in such a manner that said handlebar can rotate with respect to said fork from a first position, corresponding to a driving position, to a second position, corresponding to a parking position, and visa versa. Because the coupling member itself enables the rotation, it is possible to rotate the handlebar from the one to the other position, without the use of a separate, additional tool and in this way to store and transport the vehicle in a more compact way. As the coupling member is tilted over a first angle, the rotation of the handlebar can be done without having to hold the front wheel. This orientation of the coupling member makes it possible to apply a force on the handlebar, which doesn't cause the front wheel to rotate.

In a first preferred embodiment, said vehicle comprises a front wheel and wherein said axis being tilted in a plane in which said front wheel extends. This results in a more easy use of a vehicle comprising such a coupling member, as the force, to be applied on the handlebar to accomplish the rotation thereof, can be applied in a more comfortable way. Another advantage is that the handlebar rotates away from other elements of the vehicle like for example the frame, the seat and the front light. The handlebar can then rotate in a space free from those other elements, thereby avoiding an impact with them.

In a second preferred embodiment, a coupling member according to the invention is characterized in that one of said first and second parts comprises at least one spring leave, each spring leave extending offset to said axis in a plane parallel to said axis, the other of said first and second parts comprises a protrusion, which protrusion comprises at least two faces extending parallel to said axis, said protrusion and said spring leave being mounted in a frictional engagement with each other, said protrusion being dimensioned in such a manner as to enable a transition from said first to said second position, said spring leave being mounted such as to be under tension during said transition. The tension applied on the spring leave by the movement of the protrusion causes the spring leave to bring the protrusion in one of the first and second positions. This results in a more easy switching of the handlebar from the one to the other position.

In a third preferred embodiment, the coupling member comprises at least one hinged member having a first and second segment hingedly connected to each other, said first segment being pivotably connected to said first part and said second segment being pivotably connected to said second part, said first and second segment being movable between a stretched out and a folded up position, one of said stretched out and folded up positions corresponds with said first position and the other of said stretched out and folded up position corresponds with said second position in such a manner that said first and second part, in rotating from one of said first and second position to the other of said first and second position, move said hinged member from stretched out to folded up position, said coupling member further comprises a holding element which is provided for holding said hinged member at least in one of said stretched out and folded up positions when in the latter position. Because of the relationship between the end-positions of the hinged member, which are the stretched out and folded up positions, and the first and second position of the handlebar, the hinged member controls as if to say the rotation in between the first and second position. The holding element blocks the movement of the hinged member, which hinged member then automatically blocks the rotation of the first part with respect to the second part. This blocking causes on its turn to safely use the vehicle, especially in the driving position.

The invention will now be described in more details with respect to the drawings illustrating some preferred embodiments of a coupling member according to the present invention. In the drawings:
figure 1 illustrates a two wheeled vehicle having his handlebar in driving position;
figure 2 illustrates a two wheeled vehicle having his handlebar in parking position;
figure 3 illustrates a coupling member according to the present invention;
figure 4 illustrates a two wheeled vehicle having a coupling member according to the present invention and showing the first angle;
figure 5 illustrates the force to be applied on the handlebar and the resolved forces;
figure 6 illustrates a cross section along line VI - VI' of one embodiment of a coupling member in a driving position;
figure 7 illustrates a cross section along line VI - VI' of one embodiment of a coupling member in an intermediate position;
figure 8 illustrates a cross section along line VI - VI' of one embodiment of a coupling member in a parking position;
figure 9a illustrates a cross section along axis 8 of one embodiment of a coupling member having a blocking element;
figure 9b illustrates a cross section along line VI - VI' of one embodiment of a coupling member having a blocking element;
figure 10 illustrates a cross section along line VI - VI' of another embodiment of a coupling member in a driving position;
figure 11 illustrates a cross section along line VI - VI' of another embodiment of a coupling member in an intermediate position;
figure 12 illustrates a cross section along line VI - VI' of another embodiment of a coupling member in a parking position.

In the drawings a same reference number has been allocated to a same or analogous element.

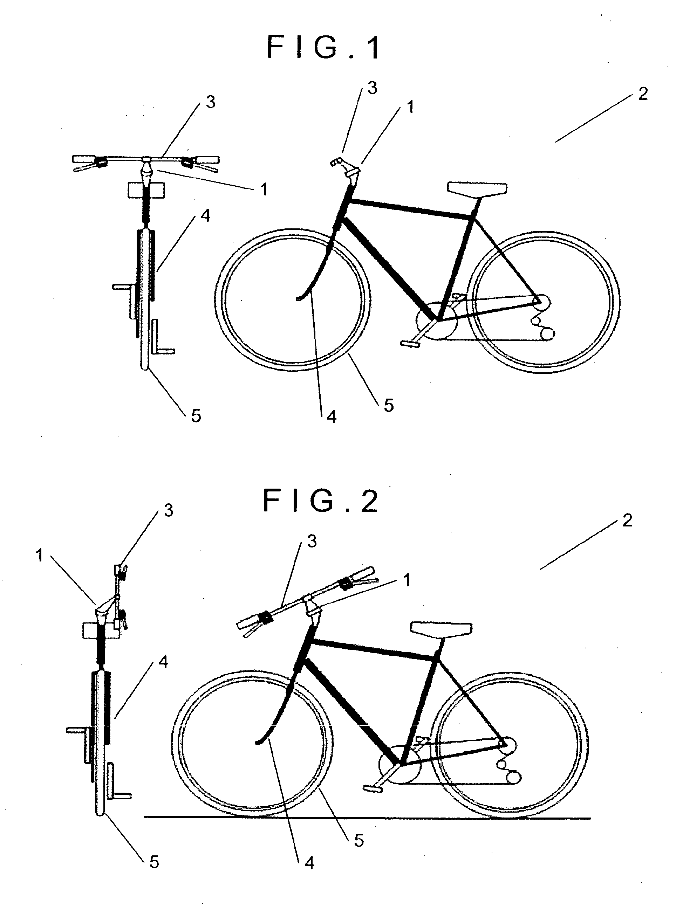

Figure 1 and 2 show a two wheeled vehicle 2 comprising a coupling member 1. The coupling member 1 is mounted between a handlebar 3 and a fork 4 of the vehicle 2. The fork 4 is mounted on a front wheel 5 of the vehicle. Figure 1 shows the vehicle 2 in a conventional manner where the handlebar 3 is aligned substantially perpendicular to the plane in which the front wheel 5 extends, which results in a comfortable driving position. Figure 2 distinguishes over figure 1 in that the handlebar 3 is aligned substantially parallel to the plane in which the front wheel 5 extends, which results in a more compact setup when the handlebar 3 is aligned in the parking position.

Being able to rotate the handlebar 3 with respect to the front wheel 5 is useful as it allows having the advantages of both alignments. The classical manner to rotate the handlebar 3 with respect to the front wheel 5 is to first loosen the connection between the handlebar 3 and the fork 4 using a separate, additional tool, and then hold the front wheel 5 while rotating the handlebar 3. This is quite cumbersome.

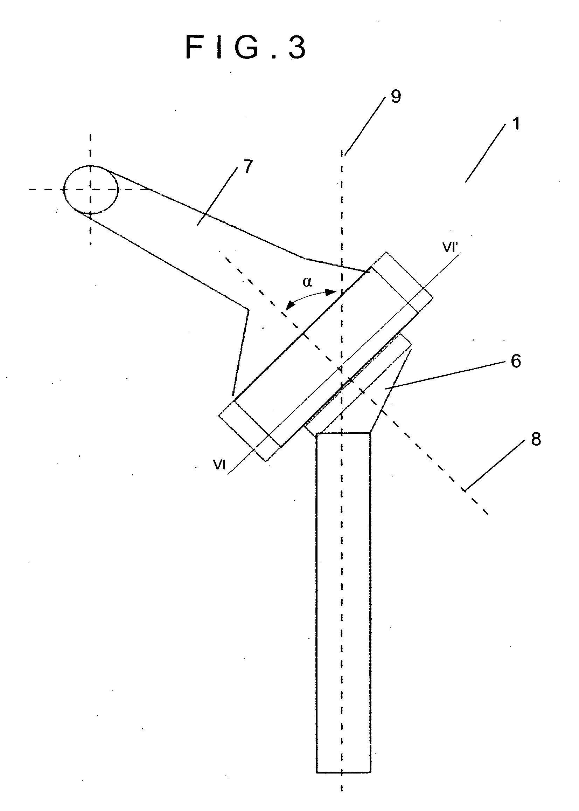

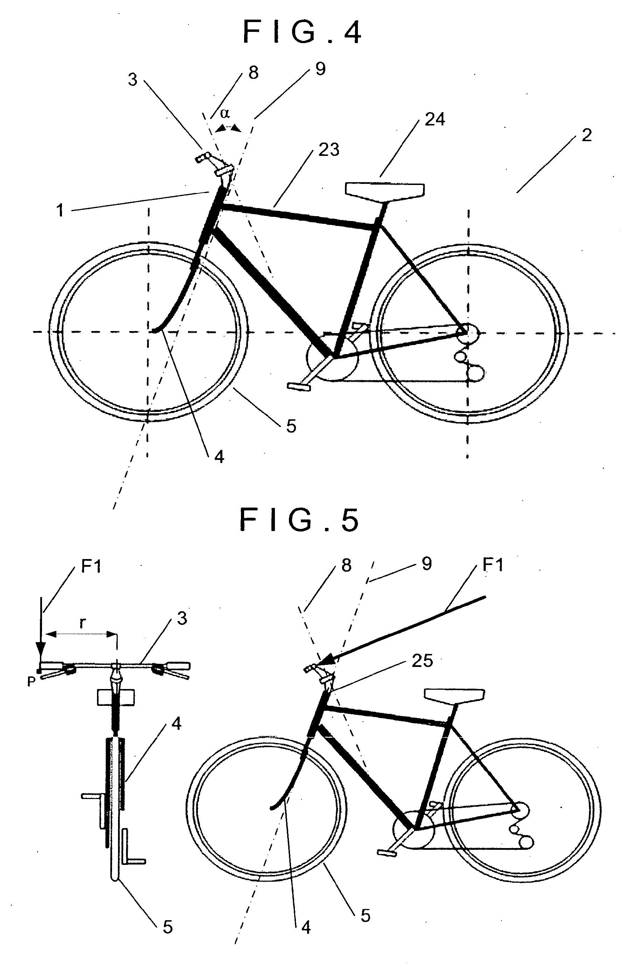

In order to enable the storage and transport of the vehicle 2 in a more compact manner without the use of a separate, additional tool and without necessarily having to hold the front wheel 5 while rotating the handlebar 3, a coupling member 1 according to the present invention is mounted on the vehicle between the handlebar 3 and the fork 4. As illustrated in figure 3, the coupling member 1 comprises a first part 6 and a second part 7. The first part 6 is provided to be connected to the fork 4, for example by a draglink, and the second part 7 is provided to be connected to the handlebar 3, for example by a mounting flange. The first part 6 and second part 7 are rotably coupled and mounted along a same axes 8. This axis 8 is tilted with respect to the rotational axis 9 of the handlebar 3 over a first angle α, situated between 10 and 85 degrees, preferably between 20 and 70 degrees, more preferably between 35 and 55 degrees. The final value of the angle α offering the most appropriate operational solution of the coupling member will be determined taking into account the inclination of the fork. The first part 6 and second part 7 are rotably coupled to each other in such a manner that the handlebar 3 can rotate from a first position, corresponding to a driving position as shown in figure 1, to a second position, corresponding to a parking position as shown in figure 2, and visa versa. The first angle α can be best seen in figure 4.

The fact that the coupling member is tilted over the first angle α with respect to axis 9 results in enabling a more easy rotation of the handlebar 3 with respect to the front wheel 5, without necessarily having to hold the front wheel 5 while rotating the handlebar 3. As illustrated in figure 5, a force F1 is applied on one end of the handlebar, which is situated at a distance r from axis 9. The force F1 is applied in a plane substantially perpendicular to axis 8 and at a point p offset of axis 9. This force F1 causes a torque M = F1 x r which causes a rotation of the coupling member 1 also situated at this distance r of the end of the handlebar. As the coupling member itself is inclined with respect to the coupling 25 of the handlebar with the frame 23, in an initial phase of the rotation, the majority of the torque, which causes the rotation of the coupling member, is picked up by the latter so that nearly no coupling member rotation force is exerted on the front wheel. There is then insufficient force to let the front wheel rotate.

In a first preferred embodiment, the axis 8 is tilted in a plane in which the front wheel 5 extends. This results in a more easy use of a vehicle 2 comprising such a coupling member 1, since the force F2, to be applied on the handlebar 3 for accomplishing the rotation, is oriented more downward. Another advantage is that the handlebar 3 then rotates away from other elements of the vehicle 2 like for example the frame 23, the seat 24 and the front light (not shown). The handlebar 3 can then rotate in a space free from those other elements of the vehicle, thereby avoiding an impact with them.

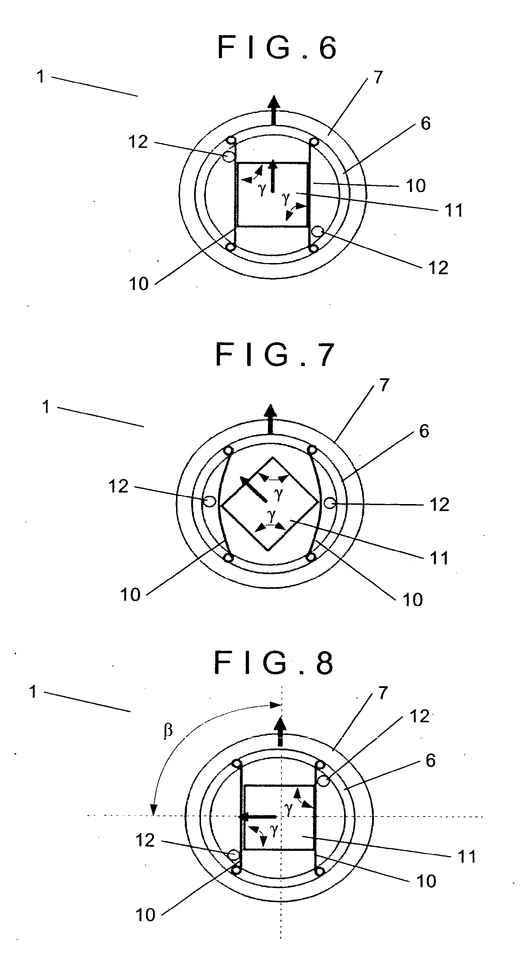

One preferred embodiment of the coupling member is shown more detailed in figure 6. This figure shows the coupling member in a cross-section along line VI - VI' (figure 3), which is perpendicular to the axis 8. In this embodiment, the first part 6 comprises two spring leaves 10 extending in parallel to each other. The second part 7 comprises two stoppers 12 and a protrusion 11 having four faces. The protrusion 11 is mounted in between the spring leaves 10 so as to result in a frictional engagement with the latter. The stoppers are mounted in such a manner that they are situated outside the space delimited by the two spring leaves 10.

For describing the movements of the elements inside the coupling member when rotating from one to the other position, reference will be made to the figures 6, 7 and 8. When the coupling member is mounted on a vehicle, the first part 6 is connected to the fork 4 and the second part 7 is connected to the handlebar 3. So in rotating the handlebar 3 with respect to the front wheel 5, which is connected to the fork 4, the second part 7 rotates with respect to the first part 6.

Figure 6 and figure 8 show the coupling member in the first respectively the second position. Figure 7 shows the coupling member in an intermediate position. To rotate the handlebar from the first to the second position, a force is applied on one end of the handlebar 3 (indicated by arrow a in figure 1), which is connected to the second part 7. Due to the applied force F1, the second part 7 starts rotating. This rotation causes the protrusion 11 to rotate. As the latter is frictionally engaged with the spring leaves, the rotation of the protrusion causes the spring leaves 10 to be bend outwardly. This is possible because in rest-position the spring leaves 10, when aligned along one face of the protrusion 11, extend beyond latter face. Due to this resilient force and during the first half of the rotation, the spring leaves 10 force the protrusion 11 to go back to the first position. If the rotation however continues, the protrusion continues to apply a force on the spring leave. Having reached the second half of the rotation, the force applied on the spring leaves 10 will reduce which helps the protrusion 11 to be pushed by the spring leave towards the second position. The stoppers 12 prevent the second part 7 to rotate further than in between the first and second position because the stoppers 12 run into the spring leaves 10 in the two positions. The second angle β extending between the first and second position is substantially complementary to the third angle γ extending between the faces of the protrusion 11, which causes the stoppers to limit the movement in between the first and second position.

A movement from the second back to the first position is analogue to the one already described. It has to be noted that this is only an example of one embodiment of the coupling member. It has to be made clear that it is possible to have a similar coupling member 1 with only one spring leave 10, or with a protrusion 11 only having two faces perpendicular to each other. It is also possible to have a coupling member without or with only one stopper.

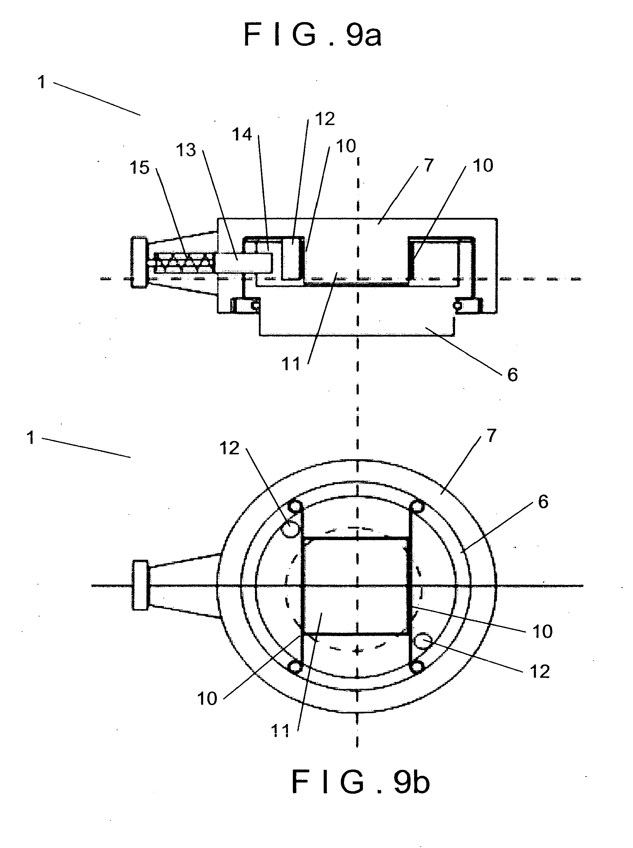

Figure 9 shows a similar embodiment of the coupling member 1 as the one illustrated in the figures 6, 7 and 8 but with a blocking element added to it. The blocking element comprises a pin 13, a hole 14 and a spring 15. The pin 13 is mounted on the spring 15 and both are located on the second part 7. The first part 6 preferably comprises beside the hole 14 at least one complementary hole (not shown). The blocking element is mounted in such a manner that in at least one of the two positions position the pin 13 and one of the holes 14 are aligned so as to enable the pin 13 to engage into latter hole 14. This blocks the first part 6 and second part 7 in at least one of the first and second position, when the coupling member 1 is positioned in latter position. This blocking is an advantage in view of safety, especially in the driving position.

Additionally, a key (not shown) can be used within the blocking system, provided for securing the blocking element. The key cooperates with the blocking system and enables to lock it and unblock it when the key is inserted. Another possible option is a remote controlled deblocking means (not shown) provided for receiving a signal, generated by a remote control transmitter. The deblocking means are provided for moving the pin 13 upon receipt of the signal in order to deblock the blocking element. In this configuration, there could be an additional spring (not shown) mounted in the coupling member which additional spring gets stretched by forcing the handlebar in his parking position. This additional spring is then unloaded when the deblocking means pulls out the pin 13, which results in an automatic rotating from parking to driving position of the handlebar.

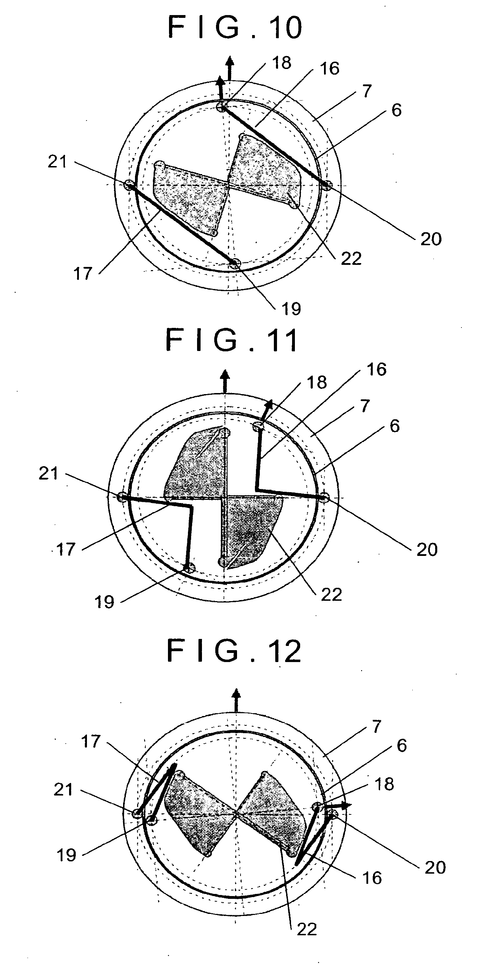

Referring now to figures 10 to 12, there is shown another embodiment of a coupling element according to the invention. According to this embodiment, the coupling element comprises two hinged members 16 and 17. Each hinged member comprises a first segment 18, 19 which is pivotably connected to the first part 6. Each hinged member further comprises a second segment 20, 21 which is pivotably connected to the second part 7. The first segment 18, 19 is pivotably connected to the second segment 20, 21. The hinged members 16 and 17 have two stages, namely a stretched out and a folded up stage. In one of the first and second positions, the hinged members 16 and 17 are stretches out, as shown in figure 10. In the other of the first and second positions, the hinged members 16 and 17 are folded in, as shown in figure 12. The coupling element also comprises a holding element 22 which is wing shaped in the shown embodiment. The holding element 22 is formed in such a manner that it is provided for holding the hinged members 16 and 17 at least in one of the stretched out and folded up positions when in the latter position as showed in figures 10 and 12.

Figure 10 and figure 12 show a coupling member in the first respectively second position. Figure 11 shows the coupling member in an intermediate position. To rotate the handlebar from the first to the second position, the holding element 22 first has to be moved to release the hinged members 16 and 17, before the force F1 is to be applied on the handlebar 3. Releasing the hinged members 16 and 17, as shown in figure 10, is effected by rotating clockwise the holding element 22. The force F1 is to be applied on one end of the handlebar 3, in a similar manner as described with respect to the embodiment with the spring leaves. Upon application of this force, the second part 7 starts rotating, thereby folding the segments of the hinged members 16 and 17 with respect to each other. In this rotation, the extremity of the first segments 18 and 19 of the hinged members 16 and 17 each describe a segment of a circle having the axis 8 as his centre. When the folded in position is reached, as shown in figure 12, the holding element 22 is rotated anticlockwise in order to hold the hinged members 16 and 17 in the latter position.

The holding element 22 is preferably wing-shaped and rotationally mounted on the axis 8. The holding element 22 is preferably mounted on a spring (not shown) so that, to release the hinged members 16 and 17, is has to be rotated against the tension of the spring. The holding element 22 is formed in such a manner as to enable holding the hinged members 16 and 17 in at least one of the stretched out and folded in positions, by rotating the holding element 22, when in latter position. Additionally, a key (not shown) can be used to rotate the holding element 22.

The holding element 22 being wing-shaped and preferably having four faces extending parallel to the axis 8 and offset from this axis 8. A first and a second face are provided to contact the first respectively second hinged member when in the stretched out position. A third and a fourth face are provided to contact the first respectively second hinged member when in the folded in position. The faces are situated offset from the axis 8 at a same distance as the one at which are situated the segments of the hinged member contacting said face. The wing-shaped element is further formed so as to enable the faces to rotate away from the hinged members only by rotating to one direction, which is clockwise in this embodiment.

It should be noted that although the figures show an embodiment with two hinged members, the invention isn't limited to only an embodiment with two members as it is also possible to use less or more hinged members.

In this second embodiment, there is no need for an extra blocking system as the blocking function is accomplished by the wing-element. Also an extra stopper is not necessary as the parts can never rotate further then their first and second position because of the stretched out and folded in hinged members.

## Claims

1. A coupling member (1) being mounted between a fork and a handlebar of a two wheeled vehicle (2), in particular a bicycle, and said coupling member (1) comprises a first (6) and a second part (7), which first part (6) is provided to be connected to said fork (4) and which second part (7) is provided to be connected to said handlebar (3), which first and second part are rotably coupled and mounted along a same axis (8) in such a manner that said handlebar can rotate from a first position, corresponding to a driving position, to a second position, corresponding to a parking position, and visa versa, **characterized in that** said axis (8) is tilted with respect to a rotational axis (9) of said handlebar over a first angle situated between 10 and 85 degrees, preferably between 20 and 70 degrees.

2. The coupling member as claimed in claim 1, **characterised in that** said vehicle comprises a front wheel (5) and wherein said axis being tilted in a plane in which said front wheel extends.

3. The coupling member as claimed in claim 1 or 2, **characterized in that** said first angle is situated between 35 and 55 degrees.

4. The coupling member as claimed in anyone of the claims 1 to 3, **characterized in that** one of said first (6) and second (7) parts comprises at least one spring leave (10), each spring leave extending offset to said axis in a plane parallel to said axis, the other of said first and second parts comprises a protrusion, which protrusion comprises at least two faces extending parallel to said axis, said protrusion and said spring leave (10) being mounted in a frictional engagement with each other, said protrusion being dimensioned in such a manner as to enable a transition from said first to said second position, said spring leave (10) being mounted such as to be under tension during said transition.

5. The coupling member as claimed in claim 4, **characterized in that** said first and second position form a second angle with respect to each other, and wherein said at least two faces form a third angle with each other, which third angle and second angle are complementary to each other.

6. The coupling member as claimed in claim 4 or 5, **characterized in that** said spring (10) when aligned along one of said faces extends beyond the latter face.

7. The coupling member as claimed in anyone of claims 4 to 6, **characterized in that** it comprises at least one stopper (12) provided for limiting the rotational movement of said first and second part in between said first and second position.

8. The coupling member as claimed in anyone of claims 4 to 7, **characterized in that** it comprises a blocking element (13,14,15) provided to keep said first and second part in at least one of said first and second position, when said coupling member is positioned in latter position.

9. The coupling member as claimed in claim 8, **characterized in that** said blocking element comprises a pin (13) and at least one complementary hole(s) (14), said pin being mounted on one of said first and second parts and said hole(s) being provided in the other of said first and second parts in such a manner that in at least one of said first and second position said pin and one of said at least one complementary hole(s) are aligned so as to enable the pin to engage into latter hole for blocking purpose.

10. The coupling member as claimed in claim 9, **characterized in that** said pin is mounted on a spring (15).

11. The coupling member as claimed in anyone of claims 8 to 10, **characterized in that** said blocking element comprises a key provided for unblocking said blocking element.

12. The coupling member as claimed in anyone of claims 8 to 10, **characterized in that** said blocking element comprises remote controlled deblocking means provided for receiving a signal, which deblocking means are provided for moving said pin upon receipt of said signal in order to deblock said blocking element.

13. The coupling member as claimed in anyone of the claims 1 to 3, **characterized in that** it comprises at least one hinged member (16,17) having a first (18) and second (19) segment hingedly connected to each other, said first segment being pivotably connected to said first part and said second segment being pivotably connected to said second part, said first and second segment being movable between a stretched out and a folded up position, one of said stretched out and folded up positions corresponds with said first position and the other of said stretched out and folded up position corresponds with said second position in such a manner that said first and second part, in rotating from one of said first and second position to the other of said first and second position, move said hinged member from stretched out to folded up position, said coupling member further comprises a holding element (22) which is provided for holding said hinged member at least in one of said stretched out and folded up positions when in the latter position.

14. The coupling member as claimed in claim 13, **characterized in that** said holding element (22) is wing shaped and rotationally mounted on said axis.

15. The coupling member as claimed in claim 14, **characterized in that** said wing shaped element (22) is mounted on a spiral spring in such a manner that the spiral spring being under tension during a moving of said hinged member from one of said stretched out and folded up positions to the other of said stretched out and folded up positions.

16. The coupling member as claimed in claims 14 or 15, **characterized in that** said holding element being provided with a removable key to control said wing shaped element.

## Patentansprüche

1. Verbindungselement (1), welches zwischen einer Gabel und einer Lenkstange eines zweirädrigen Fahrzeugs (2), insbesondere ein Fahrrad, angebracht ist und wobei das Verbindungselement (1) einen ersten (6) und einen zweiten (7) Teil umfasst, wobei der erste Teil (6) vorgesehen ist, um mit der Gabel (4) verbunden zu werden, und wobei der zweite Teil (7) vorgesehen ist, um mit der Lenkstange (3) verbunden zu werden, wobei der erste und der zweite Teil drehbar gekoppelt sind und entlang einer gleichen Achse (8) auf solch eine Weise angebracht sind, dass die Lenkstange sich von einer ersten Position, entsprechend einer Fahrposition, in eine zweite Position, entsprechend einer Parkposition, und umgekehrt verdrehen kann, **dadurch gekennzeichnet, dass** die Achse (8) in Bezug auf eine Rotationsachse (9) der Lenkstange über einen ersten Winkel, welcher zwischen 10 und 85 Grad, vorzugsweise zwischen 20 und 70 Grad, liegt, geneigt ist.

2. Verbindungselement nach Anspruch 1, **dadurch gekennzeichnet, dass** das Fahrzeug ein Vorderrad (5) umfasst und wobei die Achse in einer Ebene geneigt ist, in welcher sich das Vorderrad erstreckt.

3. Verbindungselement nach Anspruch 1 oder 2, **dadurch gekennzeichnet, dass** der erste Winkel zwischen 35 und 55 Grad liegt.

4. Verbindungselement nach jedem der Ansprüche 1 bis 3, **dadurch gekennzeichnet, dass** entweder der erste (6) oder der zweite (7) Teil wenigstens ein Federblatt (10) umfasst, wobei sich das Federblatt versetzt zur Achse in einer Ebene parallel zur Achse erstreckt, der andere Teil der Gruppe aus erstem und zweitem Teil einen Vorsprung umfasst, wobei der Vorsprung wenigstens zwei Flächen aufweist, die sich parallel zur Achse erstrecken, wobei der Vorsprung und das Federblatt (10) in einem Reibungseingriff miteinander angebracht sind, wobei der Vorsprung so ausgelegt ist, um einen Übergang von der ersten in die zweite Position zu erlauben, wobei das Federblatt (10) so angebracht ist, um unter Spannung während des Übergangs zu stehen.

5. Verbindungselement nach Anspruch 4, **dadurch gekennzeichnet, dass** die erste und die zweite Position in Bezug aufeinander einen zweiten Winkel einschließen und wobei die wenigstens zwei Flächen einen dritten Winkel miteinander ausbilden, wobei der dritte Winkel und der zweite Winkel zueinander komplementär sind.

6. Verbindungselement nach Anspruch 4 oder 5, **dadurch gekennzeichnet, dass** die Feder (10), wenn sie entlang einer der Flächen ausgerichtet ist, sich über die jeweilige Fläche hinaus erstreckt.

7. Verbindungselement nach jedem der Ansprüche 4 bis 6, **dadurch gekennzeichnet, dass** es wenigstens einen Anschlag (12) umfasst, welcher zum Begrenzen der Rotationsbewegung des ersten und des zweiten Teils zwischen der ersten und der zweiten Position bereitgestellt ist.

8. Verbindungselement nach jedem der Ansprüche 4 bis 7, **dadurch gekennzeichnet, dass** es ein Blockierelement (13, 14, 15) umfasst, welches vorgesehen ist, um den ersten und den zweiten Teil in wenigstens einer der beiden Positionen aus erster und zweiter Position zu halten, wenn das Verbindungselement in der jeweiligen Position positioniert ist.

9. Verbindungselement nach Anspruch 8, **dadurch gekennzeichnet, dass** das Blockierelement einen Stift (13) und wenigstens ein komplementäres Loch(Löcher) (14) umfasst, wobei der Stift entweder im ersten oder im zweiten Teil angebracht ist und das Loch(die Löcher) (14) im jeweils anderen der zwei Teile, bestehend aus dem ersten und dem zweiten Teil, auf solche Weise vorgesehen ist(sind), dass in wenigstens einer der zwei Positionen, bestehend aus der ersten und der zweiten Position, der Stift und eines des wenigstens einen komplementären Lochs(Löcher) so gefluchtet sind, um es dem Stift zu ermöglichen, in das jeweilige Loch zum Zwecke des Blockierens einzugreifen.

10. Verbindungselement nach Anspruch 9, **dadurch gekennzeichnet, dass** der Stift auf einer Feder (15) angebracht ist.

11. Verbindungselement nach jedem der Ansprüche 8 bis 10, **dadurch gekennzeichnet, dass** das Blockierelement einen Schlüssel umfasst, welcher vorgesehen ist, um das Blockierelement zu entriegeln.

12. Verbindungselement nach jedem der Ansprüche 8 bis 10, **dadurch gekennzeichnet, dass** das Blockierelement ferngesteuerte Entriegelungsmittel umfasst, welcher vorgesehen sind, ein Signal zu empfangen, wobei die Entriegelungsmittel vorgesehen sind, um den Stift bei Empfang des Signals zu bewegen, um das Blockierelement zu entriegeln.

13. Verbindungselement nach jedem der Ansprüche 1 bis 3, **dadurch gekennzeichnet, dass** es wenigstens ein mit Scharnier versehenes Element (16, 17) umfasst, welches ein erstes (18) und ein zweites (19) Segment aufweist, die durch ein Scharnier miteinander verbunden sind, wobei das erste Segment drehbar mit dem ersten Teil verbunden ist und das zweite Segment drehbar mit dem zweiten Teil verbunden ist, wobei das erste und das zweite Segment zwischen einer ausgestreckten und einer zusammengeklappten Position bewegbar ist, wobei eine der beiden Positionen aus ausgestreckter und zusammengeklappter Position der ersten Position entspricht und die andere der beiden Positionen aus ausgestreckter und zusammengeklappter Position der zweiten Position entspricht, so dass der erste und zweite Teil beim Drehen von einer der beiden Positionen aus erster und zweiter Position in die andere der beiden Positionen aus erster und zweiter Positionen das mit Scharnier versehene Element aus der ausgestreckten in die zusammengeklappte Position bewegen, wobei das Verbindungselement des Weiteren ein Halteelement (22) umfasst, welches zum Halten des mit Scharnier versehenen Elements wenigstens in einer der beiden Positionen aus ausgestreckter und zusammengeklappter Position vorgesehen ist, wenn es sich in der letzteren Position befindet.

14. Verbindungselement nach Anspruch 13, **dadurch gekennzeichnet, dass** das Halteelement (22) flügelförmig ist und drehbar auf der Achse angebracht ist.

15. Verbindungselement nach Anspruch 14, **dadurch gekennzeichnet, dass** das flügelförmige Element (22) auf einer Spiralfeder derartig angebracht ist, dass die Spiralfeder während eines Bewegens des mit Scharnier versehenen Elements von einer der beiden Positionen aus ausgestreckter und zusammengeklappter Position in die andere der beiden Positionen aus ausgestreckter und zusammengeklappter Position unter Spannung steht.

16. Verbindungselement nach den Ansprüchen 14 oder 15, **dadurch gekennzeichnet, dass** das Halteelement mit einem entfernbaren Schlüssel ausgestattet ist, um das flügelförmige Element zu steuern.

## Revendications

1. Élément d'accouplement (1) monté entre une fourche et un guidon d'un véhicule à deux roues (2), en particulier d'une bicyclette, ledit élément d'accouplement (1) comprenant une première (6) et une deuxième partie (7), laquelle première partie (6) est prévue pour être reliée à ladite fourche (4) et laquelle deuxième partie (7) est prévue pour être reliée audit guidon (3), lesquelles première et deuxième parties sont accouplées de manière rotative et montées le long d'un même axe (8) de telle manière que ledit guidon puisse tourner d'une première position correspondant à une position de conduite dans une deuxième position correspondant à une position de stationnement et vice-versa, **caractérisé en ce que** ledit axe (8) est incliné par rapport à un axe de rotation (9) dudit guidon à un premier angle compris entre 10 et 85 degrés, de préférence entre 20 et 70 degrés.

2. Élément d'accouplement tel que revendiqué dans la revendication 1, **caractérisé en ce que** ledit véhicule comprend une roue avant (5) et dans lequel ledit axe est incliné dans un plan dans lequel s'étend la roue avant.

3. Élément d'accouplement tel que revendiqué dans la revendication 1 ou 2, **caractérisé en ce que** ledit premier angle est compris entre 35 et 55 degrés.

4. Élément d'accouplement tel que revendiqué dans l'une quelconque des revendications 1 à 3, **caractérisé en ce qu'**une desdites première (6) et deuxième (7) parties comprend au moins une lame de ressort (10), chaque lame de ressort s'étendant de manière décalée par rapport audit axe dans un plan parallèle audit axe, l'autre desdites première et deuxième parties comprend une protubérance, laquelle protubérance comprend au moins deux faces s'étendant parallèlement audit axe, ladite protubérance et ladite lame de ressort (10) étant montées pour être en contact de frottement l'une avec l'autre, ladite protubérance étant dimensionnée de manière à permettre une transition de ladite première dans ladite deuxième position, ladite lame de ressort (10) étant montée de manière à être sous tension pendant ladite transition.

5. Élément d'accouplement tel que revendiqué dans la revendication 4, **caractérisé en ce que** lesdites première et deuxième positions forment un deuxième angle l'une par rapport à l'autre, et dans lequel lesdites au moins deux faces forment un troisième angle l'une avec l'autre, lesquels troisième angle et deuxième angle sont complémentaires l'un de l'autre.

6. Élément d'accouplement tel que revendiqué dans la revendication 4 ou 5, **caractérisé en ce que** ledit ressort (10) s'étend au-delà de l'une desdites faces quand il est aligné sur cette dernière face.

7. Élément d'accouplement tel que revendiqué dans l'une quelconque des revendications 4 à 6, **caractérisé en ce qu'**il comprend au moins un arrêt (12) prévu pour limiter le mouvement de rotation desdites première et deuxième parties entre lesdites première et deuxième positions.

8. Élément d'accouplement tel que revendiqué dans l'une quelconque des revendications 4 à 7, **caractérisé en ce qu'**il comprend un élément de blocage (13, 14, 15) prévu pour maintenir lesdites première et deuxième parties dans au moins une desdites première et deuxième positions, quand ledit élément d'accouplement est positionné dans cette dernière position.

9. Élément d'accouplement tel que revendiqué dans la revendication 8, **caractérisé en ce que** ledit élément de blocage comprend une broche (13) et au moins un (des) trou(s) complémentaires(s) (14), ladite broche étant montée sur une desdites première et deuxième parties et ledit (lesdits) trou(s) étant prévu(s) dans l'autre desdites première et deuxième parties de telle manière que dans au moins une desdites première et deuxième positions, ladite broche et un desdits au moins un trou(s) complémentaire(s) soient alignés afin de permettre à la broche de s'engager dans ce dernier trou à des fins de blocage.

10. Élément d'accouplement tel que revendiqué dans la revendication 9, **caractérisé en ce que** ladite broche est montée sur un ressort (15).

11. Élément d'accouplement tel que revendiqué dans l'une quelconque des revendications 8 à 10, **caractérisé en ce que** ledit élément de blocage comprend une clé prévue pour débloquer ledit élément de blocage.

12. Élément d'accouplement tel que revendiqué dans l'une quelconque des revendications 8 à 10, **caractérisé en ce que** ledit élément de blocage comprend des moyens de déblocage commandés à distance prévus pour recevoir un signal, lesquels moyens de déblocage sont prévus pour déplacer ladite broche lors de la réception dudit signal afin de débloquer ledit élément de blocage.

13. Élément d'accouplement tel que revendiqué dans l'une quelconque des revendications 1 à 3, **caractérisé en ce qu'**il comprend au moins un élément articulé (16, 17) ayant un premier (18) et un deuxième (19) segment reliés de manière articulée l'un à l'autre, ledit premier segment étant relié de manière pivotante à ladite première partie et ledit deuxième segment étant relié de manière pivotante à ladite deuxième partie, lesdits premier et deuxième segments étant déplaçables entre une position étendue et une position repliée, une desdites positions étendue et repliée correspond à ladite première position et l'autre desdites positions étendue et repliée correspond à ladite deuxième position de telle manière que lesdites première et deuxième parties, en pivotant d'une desdites première et deuxième positions dans l'autre desdites première et deuxième positions, déplacent ledit élément articulé de la position étendue dans la position repliée, ledit élément d'accouplement comprend en outre un élément de maintien (22) qui est prévu pour maintenir ledit élément articulé au moins dans une desdites positions étendue et repliée quand il se trouve dans cette dernière position.

14. Élément d'accouplement tel que revendiqué dans la revendication 13, **caractérisé en ce que** ledit élément de maintien (22) est en forme d'aile et est monté de manière rotative sur ledit axe.

15. Élément d'accouplement tel que revendiqué dans la revendication 14, **caractérisé en ce que** ledit élément en forme d'aile (22) est monté sur un ressort à boudin de telle manière que le ressort à boudin soit sous tension pendant un mouvement dudit élément articulé d'une desdites positions étendue et repliée dans l'autre desdites positions étendue et repliée.

16. Élément d'accouplement tel que revendiqué dans la revendication 14 ou 15, **caractérisé en ce que** ledit élément de maintien est pourvu d'une clé pouvant être enlevée pour commander ledit élément en forme d'aile.
